# NEUE EUROPÄISCHE PATENTSCHRIFT

(11) **EP 0 808 688 B2**
(45) Veröffentlichungstag und Bekanntmachung des Hinweises auf die Entscheidung über den Einspruch: **02.02.2005**
(45) Hinweis auf die Patenterteilung: 13.02.2002
(21) Anmeldenummer: 97107648.4
(22) Anmeldetag: 09.05.1997
(51) Int. Cl.: B23Q 5/04, B23Q 37/00

(54) **Werkzeugeinheit für eine Fräsmaschine**
Tool unit for milling machines
Unité d'outil pour fraiseuses

(30) Priorität: 21.05.1996 DE 19620485
(43) Veröffentlichungstag der Anmeldung: 26.11.1997
(60) Teilanmeldung: 00121544.1
(73) Patentinhaber: W. Ludt Zerspanungstechnik, 66119 Saarbrücken (DE)
(72) Erfinder: Ludt, Wolfgang, 66119 Saarbrücken (DE)
(74) Vertreter: Bernhardt, Winfrid, Dr.-Ing.

(56) Entgegenhaltungen:
- WO-A-96/39274
- CH-A- 556 708
- DE-U- 29 505 586
- US-A- 2 863 361
- US-A- 3 559 529
- US-A- 4 077 736
- US-A- 4 709 455
- PATENT ABSTRACTS OF JAPAN vol. 012, no. 027 (M-662), 27.Januar 1988 & JP 62 181849 A (HONDA MOTOR CO LTD), 10.August 1987,
- Informationsblatt des Einspreschenden vom 02.06.1994, betreffend eineMedienkupplung

## Beschreibung

Die Erfindung betrifft eine Werkzeugeinheit mit einem Basisteil einem an diesem angeordneten schnellaufenden Antrieb für ein Fräswerkzeug, insbesondere einem Schnellfrequenz-Motor, und einem an der Abtriebswelle des Antriebes angeordneten Spannfutter für das Fräswerkzeug, die an die Werkzeugaufnahme der senkrechten Spindel einer Fräsmaschine in einem spitzen Winkel zur Achse der Spindel ansetzbar ist und zugleich an einen an der Fräsmaschine vorgesehenen Anschluß mindestens für die Antriebsenergie, insbesondere ferner für Kühlwasser und/oder Druckluft, ankuppelbar ist.

Eine solche Werkzeugeinheit ist aus des DE-U-295 05 586 bekannt.
Die bekannte Werkzeugeinheit wird zusammen mit einem Satz verschiedener Fräswerkzeuge und in gleicher Weise wie diese an einem Tellermagazin sitzend zur Verfügung gehalten, von dem sie selbsttätig in das Spannfutter der Spindel eingewechselt werden kann. Ihr Fräswerkzeug befindet sich dann auf der Achse der Spindel, wird aber nicht von dieser mit normaler Drehzahl angetrieben, sondern von ihrem eigenen, schnelllaufenden Antrieb. Die Spindel dient nur noch zur Höheneinstellung; die Einstellung in den beiden waagerechten Richtungen erfolgt wie üblich durch den Maschinentisch. Mit dem schnellaufenden Fräswerkzeug können an einer normalen Fräsmaschine weitere Bearbeitungen durchgeführt werden, vor allem ein Schlichten. Das mit schräger Achse angeordnete Fräswerkzeug, das nach allen Seiten hin ausgerichtet werden kann, ist zur Bearbeitung senkrechter Flächen bis in größere Tiefe imstande. Damit lassen sich beispielsweise die Formwerkzeuge zur Herstellung von Kunststoffteilen weitgehend auf der Fräsmaschine herstellen. Auch kleine Radien in größerer Tiefe können gearbeitet werden. Ein anschließendes Erodieren ist nur noch in Einzelfällen nötig und nur noch für einen viel kleineren Rest des Materials. Es können wesentliche Verkürzungen der Bearbeitungszeit erzielt werden.

Der Erfindung liegt die Aufgabe zugrunde, die Bearbeitungsmöglichkeiten an einer Fräsmaschine weiter zu steigern.

Gemäß der Erfindung ist zu diesem Zweck eine Werkzeugeinheit der eingangs genannten Art vorgesehen, bei der der Antrieb über ein mit der Spindel der Fräsmaschine gleichachsiges Drehlager an dem Basisteil angebracht ist und durch einen Stellantrieb in dem Drehlager einstellbar ist, wobei der Antrieb derart exzentrisch zu dem Drehlager angeordne ist, daß der Mittelpunkt der Rundung der Fräswerkzeugspitze auf der Spindelachse liegt.
Letzteres bedeutet, daß die oben erwähnten Einstellungen des Werkstückes in den beiden waagerechten Richtungen durch den Maschinentisch ungeschmälert bleiben; sie müssen keinen Abstand des Fräswerkzeuges von der Achse kompensieren.

Die Verstellbarkeit durch den Stelltrieb wird in aller Regel beliebig und programmgesteuert sein: Grundsätzlich sind aber auch beschränkte Möglichkeiten denkbar und ggf. schon vorteilhaft.

Der Winkel des Antriebs zur Achse des Drehlagers wird zwischen 20 und 35°, vorzugsweise zwischen 25 und 30°, betragen. Damit ergibt sich bei den Abmessungen der derzeit verfügbaren Antriebe der benötigte Überstand des Fräswerkzeuges in seitlicher Richtung.

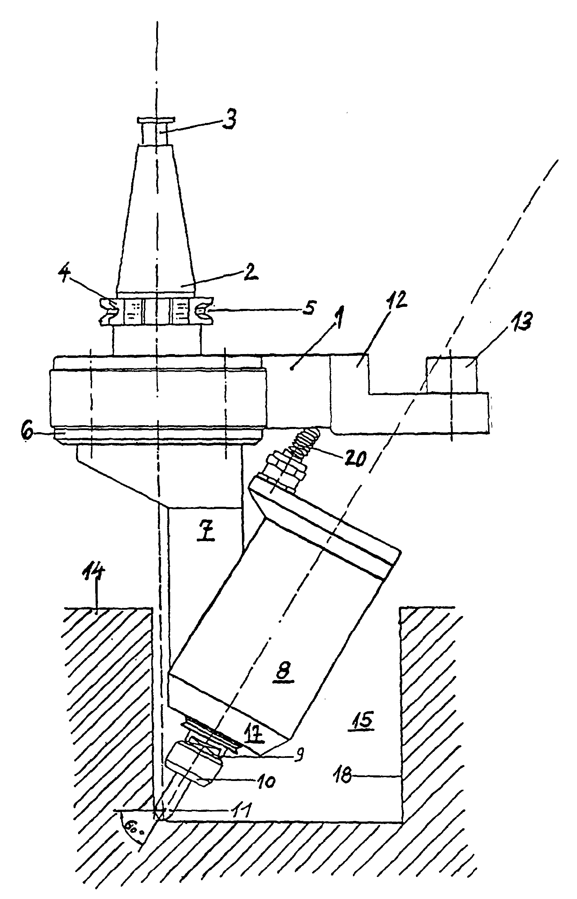

Die Zeichnung gibt ein Ausführungsbeispiel der Erfindung wieder. Sie zeigt eine Werkzeugeinheit in Ansicht.

Ein Basisteil 1 ist mit einem Zentrierkonus 2 und einem Zugzapfen 3 versehen, um mittels dieser an die Werkzeugaufnahme der Spindel einer Fräsmaschine angesetzt zu werden. Ein Bund 4 mit einer Umfangsrille 5 dient zur Aufnahme der Werkzeugeinheit an einem Tellermagazin.

In dem Basisteil 1 befinden sich ein Drehlager und ein Stelltrieb, wobei ein flacher Abtriebszapfen 6 nach unten heraustritt.

An dem Abtriebszapfen 6 ist exzentrisch ein senkrecht nach unten ragender Halter 7 angebracht an den unter einem Winkel von 30° ein Antrieb 8 in Form eines Schnellfrequenz-Motors angesetzt ist. Die Abtriebswelle 9 des Antriebes 8 trägt ein Spannfutter 10 für ein Fräswerkzeug 11. Die Anordnung ist so getroffen, daß der Mittelpunkt der Rundung der Fräswerkzeugspitze auf der Achse der Spindel der Fräsmaschine liegt.

An einem Ausleger 12 des Basisteils 1 ist ein Kupplungsteil 13 ausgebildet zur Verbindung mit einem an entsprechender Stelle fest an der Fräsmaschine installierten Gegenstück. Durch die Kupplung werden die Antriebsenergie sowie Kühlwasser für den Antrieb 8 und femer Druckluft in die Werkzeugeinheit eingeführt. Das Kühlwasser und die Druckluft werden innerhalb des Basisteils und durch das Drehlager und den Halter 7 hindurch in den Antrieb 8 weitergeführt. Die Druckluft tritt an dem Spannfutter 10 in Richtung parallel zum Fräswerkzeug 11 aus. Für das Wasser besteht eine Rückführungsleitung zu dem Kupplungsteil 13. Die Antriebsenergie fließt unter Umgehung des. Drehlagers durch ein Wendelkabel 20 aus dem Basisteil direkt in den Antrieb 8.

Geschnitten dargestellt ist ein Werkstück mit einem Hohlraum 15.
Der Hohlraum 15 ist zunächst mit unmittelbar an der Spindel eingesetzten Fräswerkzeugen herausgearbeitet worden; bei Drehzahlen bis zu 8000 min⁻¹ wurde geschruppt und anschließend semigeschlichtet.
Mit der dargestellten Werkzeugeinheit wird mit bis zu 60000 min⁻¹ feingeschlichtet. Wie aus der Zeichnung ersichtlich, ist beim Bearbeiten der senkrechten Fläche 16 des Hohlraumes der Antrieb 8 nicht im Wege. Zu diesem Zweck ist sein unteres Ende 17 noch konisch gestaltet. Der Konuswinkel beträgt 30° wie auch die Schrägstellung des Antriebes 8 gegenüber dem Drehlager durch das Winkelstück 7.
Zur Bearbeitung der gegenüberliegenden senkrechten Fläche 18 wird der Antrieb 8 mit dem Fräswerkzeug 11 durch den Stellantrieb herumgeschwenkt. Entsprechend verhält es sich mit den übrigen senkrechten Flächen.

Unter Verwendung eines gröberen Fräswerkzeuges 11 kann auch das Herausarbeiten des Hohlraumes bei Bedarf vervollständigt werden, vor allem, um kleinere Radien zu erzeugen als sie mit einem Fräskopf möglich sind, insbesondere bei Rillen an den senkrechten Flächen oder Ecken zwischen diesen.

## Patentansprüche

1. Werkzeugeinheit mit einem Basisteil (1), einem an diesem angeordneten schnellaufenden Antrieb (8) für ein Fräswerkzeug (11), insbesondere einem Schnellfrequenz-Motor, und einem an der Abtriebswelle (9) des Antriebes (8) angeordneten Spannfutter (10) für das Fräswerkzeug (11), die an die Werkzeugaufnahme der senkrechten Spindel einer Fräsmaschine in einem spitzen Winkel zur Achse der Spindel ansetzbar ist und zugleich an einen an der Fräsmaschine vorgesehenen Anschluß mindestens für die Antriebsenergie, insbesondere ferner für Kühlwasser und/oder Druckluft, ankuppelbar (13) ist,
**dadurch gekennzeichnet,**
**daß** der Antrieb (8) über ein mit der Spindel der Fräsmaschine gleichachsiges Drehlager an dem Basisteil (1) angebracht ist und durch einen Stellantrieb in dem Drehlager einstellbar ist, wobei der Antrieb derart exzentrisch zu dem Drehlager angeordnet ist, daß der Mittelpunkt der Rundung der Fräswerkzeugspitze auf der Spindelachse liegt..

2. Werkzeugeinheit nach Anspruch 1,
**dadurch gekennzeichnet,**
**daß** der Winkel des Antriebes zur Achse des Drehlagers 20 bis 35°, vorzugsweise 25 bis 30°, beträgt.

3. Werkzeugeinheit nach einem der Ansprüche 1 bis 2,
**dadurch gekennzeichnet,**
**daß** der Antrieb (8) in dem Drehlager durch den Stellantrieb beliebig verstellbar ist.

4. Werkzeugeinheit nach einem der Ansprüche 1 bis 3,
**dadurch gekennzeichnet,**
**daß** der Stellantrieb programmgesteuert ist.

## Claims

1. Tool unit having a base part (1), a high-speed drive (8), in particular a high-frequency motor, arranged on the base part (1) and intended for a milling tool (11), and a chuck (10) which is arranged on the output shaft (9) of the drive (8) and is intended for the milling tool (11), which unit can be attached to the tool carrier of the vertical spindle of a milling machine at an sharp angle to the axis of the spindle, and at the same time can be coupled (13) to a connection provided on the milling machine at least for the drive power and in particular also for cooling water and/or compressed air, **characterized in that** the drive (8) , via a pivot bearing coaxial to the spindle of the milling machine, is attached to the base part (1) and can be adjusted in the pivot bearing by an actuator, wherein the drive is arranged eccentrically to the pivot bearing in such a way that the centre of the rounded portion of the milling tool tip lies on the spindle axis.

2. Tool unit according to Claim 1, **characterized in that** the angle of the drive to the axis of the pivot bearing is 20 to 35°, preferably 25 to 30°.

3. Tool unit according to one of Claims 1 to 2, **characterized in that** the drive (8) can be adjusted in the pivot bearing by the actuator in any desired manner.

4. Tool unit according to one of Claims 1 to 3, **characterized in that** the actuator is program-controlled.

## Revendications

1. Unité à outil présentant une pièce de base (1), un dispositif d'entraînement (8) rapide disposé sur celle-ci pour un outil de fraisage (11), en particulier un moteur à fréquence rapide, et un mandrin de serrage (10) disposé sur l'arbre d'entraînement (9) du dispositif d'entraînement (8) pour l'outil de fraisage (11), qui peut être disposée dans le logement d'outil de la broche vertical d'une machine de fraisage dans un angle pointu par rapport à l'axe de la broche, et qui peut être simultanément couplée (13) à un raccord prévu sur la machine de fraisage, au moins pour l'énergie d'entraînement, en particulier également pour l'eau de refroidissement et/ou l'air comprimé, **caractérisée en ce que** le dispositif d'entraînement (8) est disposé sur la pièce de base (1) via un coussinet de pivotement ayant le même axe que la broche de la machine de fraisage et qu'il peut être réglé par un dispositif de réglage dans le coussinet de pivotement, en quoi le dispositif d'entraînement est disposé excentriquement par rapport au coussinet pivotant de telle manière que le centre de l'arrondi de la pointe de l'outil de fraisage est situé sur l'axe de la broche.

2. Unité à outil selon la revendication 1, **caractérisée en ce que** l'angle du dispositif d'entraînement par rapport à l'axe du coussinet de pivotement est de 20 à 35°, de préférence de 25 à 30°.

3. Unité à outil selon l'une quelconque des revendications 1 à 2, **caractérisée en ce que** le dispositif d'entraînement (8) est réglable de manière quelconque dans le coussinet pivotant par le dispositif de réglage.

4. Unité à outil selon l'une quelconque des revendications 1 à 3, **caractérisée en ce que** le dispositif de réglage est commandé par un ordinateur.
